# FASCICULE DE BREVET EUROPEEN

(11) **EP 3 055 533 B1**
(45) Date de publication et mention de la délivrance du brevet: **05.08.2020**
(21) Numéro de dépôt: 14790213.4
(22) Date de dépôt: 01.10.2014
(51) Int. Cl.: F01M 11/02, F16N 21/00, F01D 25/16, F01D 25/18, F16C 19/52, F16C 23/08, F16C 27/04, F16C 33/66, F16C 35/06, F02C 7/06

(54) **DISPOSITIF DE TRANSFERT D'HUILE ENTRE DEUX RÉFÉRENTIELS EN ROTATION L'UN PAR RAPPORT À L'AUTRE, ET TURBOMACHINE À HÉLICES POUR AÉRONEF AVEC UN TEL DISPOSITIF**
VORRICHTUNG ZUR ÜBERTRAGUNG VON ÖL ZWISCHEN ZWEI SICH RELATIV ZUEINANDER DREHENDEN BEHÄLTERN SOWIE PROPELLERTURBOMASCHINE FÜR EIN FLUGZEUG MIT SOLCH EINER VORRICHTUNG
DEVICE FOR TRANSFERRING OIL BETWEEN TWO REPOSITORIES ROTATING RELATIVE TO EACH OTHER, AND PROPELLER TURBOMACHINE FOR AN AIRCRAFT WITH SUCH A DEVICE

(30) Priorité: 10.10.2013 FR 1359868
(43) Date de publication de la demande: 17.08.2016
(73) Titulaire: Safran Aircraft Engines, 75015 Paris (FR)
(72) Inventeur: BELMONTE, Olivier, F-77550 Moissy-Cramayel (FR); LAO, Jérémy Phorla, F-77550 Moissy-Cramayel (FR)
(74) Mandataire: Gevers & Orès
(86) Numéro de dépôt international: PCT/FR2014/052486
(87) Numéro de publication internationale: WO 2015/052409

(56) Documents cités:
- GB-A- 2 489 021
- JP-U- S6 227 219
- US-A- 4 708 602
- US-A1- 2010 111 681

## Description

La présente invention concerne un dispositif de transfert d'huile entre deux référentiels en rotation l'un par rapport à l'autre, par exemple l'un fixe et l'autre rotatif et, plus particulièrement, quoique non exclusivement, entre un carter statique et un dispositif de réduction de vitesses ou réducteur d'une turbomachine à doublet d'hélices de propulsion contrarotatives. L'invention concerne également une telle turbomachine incorporant ledit dispositif de transfert d'huile.

L'architecture des turbomachines à doublet d'hélices contrarotatives, désignées par l'expression anglaise « open rotor », se distingue de celle des turboréacteurs usuels par le fait que la soufflante est, non plus interne, mais externe et qu'elle se compose de deux hélices coaxiales et contrarotatives pouvant être situées en amont ou en aval du générateur de gaz. Une telle architecture engendre une moindre consommation de carburant comparativement aux turboréacteurs multiflux en service sur les aéronefs commerciaux. US4708602 A décrit un système connu de transfert d'huile destiné à lubrifier les paliers d'un turbocompresseur.

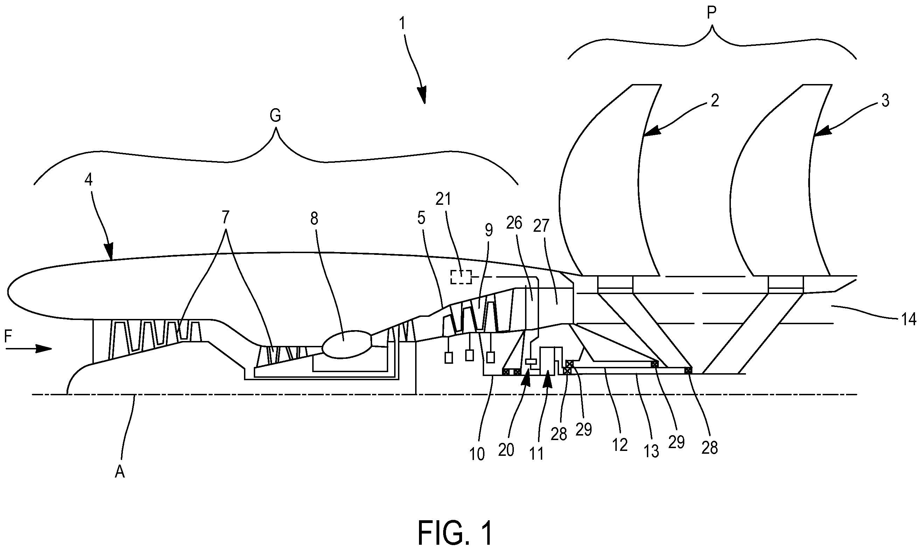

Comme le montre schématiquement la figure 1, un turbomoteur 1 à doublet d'hélices contrarotatives amont 2 et aval 3 comporte principalement, selon un axe longitudinal central A, deux parties distinctes. Une partie « générateur de gaz » G est située à l'intérieur d'une nacelle cylindrique fixe 4 à carter structural 5, portée par la structure de l'aéronef (comme la partie arrière du fuselage d'un avion), et une partie « propulsion » P avec le doublet d'hélices contrarotatives 2, 3 constituant la soufflante non carénée (« open rotor »). Cette partie P prolonge, dans cet exemple de turbomoteur, la partie générateur de gaz G et la nacelle 4.

La partie générateur de gaz G du turbomoteur 1 comporte usuellement, d'amont en aval selon le sens d'écoulement, par rapport à l'axe A, du flux gazeux F entrant dans la nacelle 4 du turbomoteur, un ou deux compresseurs 7 selon l'architecture du générateur de gaz à simple ou double corps, une chambre annulaire de combustion 8, une ou plusieurs turbines 9 à pression distincte selon ladite architecture, dont l'arbre 10 de l'une d'elles entraîne, par l'intermédiaire d'un dispositif de réduction de vitesses ou réducteur à trains épicycloïdaux 11 (désigné par l'acronyme anglais PGB pour Power Gear Box) et de façon contrarotative, les arbres concentriques et coaxiaux 12 et 13 des deux hélices amont 2 et aval 3 alignées, selon l'axe A du turbomoteur. Une tuyère 14 termine de façon usuelle le turbomoteur 1. Par ailleurs, bien qu'il ne soit pas représenté, un système de commande pour faire varier le calage des pales selon les différentes phases de vol rencontrées, c'est-à-dire le pas des hélices contrarotatives, est prévu.

En fonctionnement et brièvement, le flux d'air F entrant dans le turbomoteur 1 est comprimé, puis mélangé à du carburant et brûlé dans la chambre de combustion 8. Les gaz de combustion engendrés passent ensuite dans la partie à turbines 9 pour entraîner en rotation inverse, via le réducteur épicycloïdal 11, les hélices 2, 3 qui fournissent la majeure partie de la poussée. Les gaz de combustion sont expulsés à travers la tuyère 14 augmentant ainsi la poussée du turbomoteur 1.

Le réducteur (PGB) 11 d'un open rotor a pour but de transformer la vitesse de rotation dite rapide de la turbine de puissance 9, dont on voit sur la figure schématique 2, l'arbre de puissance 10 coopérant avec l'arbre planétaire 15 du réducteur 11, en deux vitesses distinctes dites lentes des deux hélices. Pour cela, dans l'exemple illustré, l'arbre 12 de l'hélice amont 2 se termine par un bulbe annulaire 16 pour être solidaire en rotation du porte-satellites 17 du réducteur, les satellites 18 du porte-satellites s'engrenant avec l'arbre planétaire 15 du réducteur. Quant à l'arbre 13 de l'hélice aval 3, il est solidaire en rotation d'une couronne dentée extérieure 19 du réducteur, s'engrenant autour des satellites.

Ce réducteur 11 a donc pour particularité de ne disposer d'aucun composant statique et est considéré comme un réducteur différentiel à train d'engrenages épicycloïdaux avec, à son entrée, une vitesse de rotation initiale (celle de la turbine) et, à sa sortie, deux vitesses de rotation distinctes de sens contraire (celles des deux étages de soufflante).

Aussi, pour garantir un fonctionnement optimal et fiable du réducteur 11, il est indispensable d'acheminer de l'huile pour lubrifier et refroidir les composants roulants qui le constituent, compte tenu que ce réducteur est soumis aux différents efforts des arbres d'entrée (turbine) et de sorties (hélices) en subissant des sollicitations extérieures mécaniques et thermiques significatives engendrées par la turbomachine.

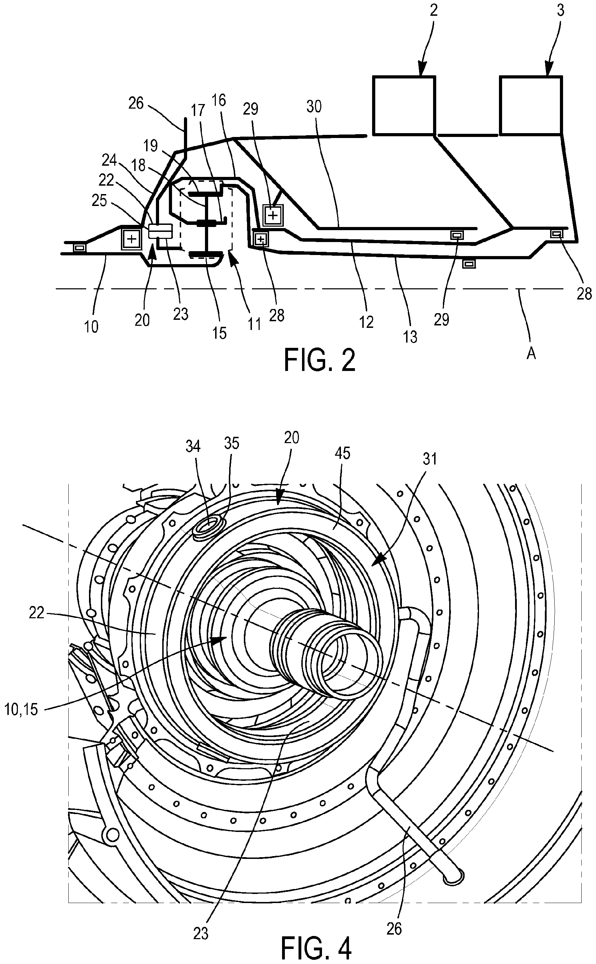

Pour cela, comme le montrent les figures 1 et 2, un dispositif de transfert d'huile 20, raccordé à une source d'alimentation en huile 21 située dans la nacelle fixe 4, est prévu pour la lubrification du réducteur, et se trouve situé du côté amont de ce dernier tourné vers la turbine, le côté aval étant tourné vers les arbres d'hélices.

Le dispositif de transfert 20 comporte principalement (figure 2) deux bagues concentriques externe 22 et interne 23 espacées radialement l'une de l'autre, la bague externe 22 étant fixé à un carter statique 24 du corps de turbine 9 et la bague interne 23 étant solidaire du porte-satellites 17 du réducteur. Pour passer la rotation entre la bague externe fixe 22 liée au carter statique (référentiel fixe) et la bague interne tournante 23 liée au réducteur (référentiel rotatif), des paliers 25, lisses ou à roulements, sont agencés entre les bagues.

Une canalisation d'alimentation 26 sortant de la source 21 traverse l'un des bras radiaux 27 (figure 1) prévus entre le carter structural 5 de la nacelle 4 et le carter statique 24 du corps de turbine 9, pour être raccordée à la bague externe 22 du dispositif de transfert 20. L'huile pénètre ainsi dans l'espace entre les bagues et sort de la bague interne 23 en direction du porte-satellites 17 pour lubrifier l'intérieur du réducteur (porte-satellites 17, satellites 18, planétaire 15 et couronne 19).

Par ailleurs, les arbres de transmission 12, 13 sont guidés par des paliers 28, 29 situés du côté aval du réducteur et donc à l'opposé de celui où se trouve le dispositif de transfert 20. En particulier, deux paliers 28 sont prévus entre les deux arbres concentriques 12, 13 des hélices et deux autres paliers 29 entre l'arbre externe 12 de l'hélice amont et un carter statique 30 du corps interne du moteur.

Il est donc possible que le réducteur rotatif (PGB) 11 puisse avoir des variations de positions aussi bien radiale qu'angulaire par rapport au reste de la turbomachine 1, notamment les carters statiques, ce qui n'est pas souhaitable. Cependant, de telles variations peuvent engendrer des désalignements entre l'axe du réducteur 11 et l'axe du dispositif de transfert d'huile 20 puisque ce dernier est relié au réducteur et au carter statique concerné. Ces désalignements peuvent par conséquent conduire à des problèmes mécaniques entre ceux-ci, compte tenu des vitesses de rotation élevées, à des fuites et/ou à une mauvaise lubrification du réducteur.

La présente invention a pour but d'apporter une solution aux inconvénients ci-dessus en proposant un dispositif de transfert d'huile dont la conception annihile notamment les éventuels désalignements.

A cet effet, le dispositif de transfert d'huile entre deux référentiels en rotation l'un par rapport à l'autre, tels qu'un carter statique et un dispositif de réduction de vitesses d'une turbomachine, comportant :
- deux bagues concentriques externe et interne dont l'une est raccordée à une alimentation d'huile issue de l'un des référentiels, et dont l'autre bague est liée à l'autre des référentiels, l'huile circulant entre lesdites bagues, et
- des paliers entre les bagues pour réaliser le changement de référentiels entre celles-ci, est remarquable par le fait qu'il comporte, de plus, un moyen souple formant amortisseur, prévu entre une première desdites bagues et une bague intermédiaire qui est séparée d'une seconde desdites bagues par lesdits paliers, ledit moyen souple définissant une chambre étanche déformable dans laquelle transite l'huile entre les deux référentiels.

Ainsi, grâce à l'invention, par le caractère souple, déformable, dudit moyen, le dispositif de transfert peut suivre les différents mouvements du dispositif de réduction de vitesses (PGB), l'huile en circulation à travers la chambre déformable définie entre les bagues, assurant l'amortissement des sollicitations extérieures, tout en garantissant la bonne lubrification des composants du dispositif réducteur. Les désalignements notamment radiaux et angulaires sont ainsi repris, de sorte qu'un bon alignement est conservé entre les deux repères. Le dispositif de transfert est ainsi capable de supporter les variations de position du réducteur.

De préférence, des trous de communication sont ménagés dans les bagues externe, intermédiaire et interne pour la circulation de l'huile.

Avantageusement, les trous de communication ménagés dans la bague externe et la bague interne sont configurés pour assurer la totalité du transfert d'huile entre les deux référentiels par le dispositif. Ainsi, le dispositif peut être raccordé par ces bagues externes et internes à deux circuits d'huile tournant l'un par rapport à l'autre et entre lesquels il permet le transfert l'huile.

Avantageusement, les paliers sont agencés de manière à définir, avec les parties de ladite deuxième bague et de la bague intermédiaire où sont ménagés lesdits trous de communication, un espace dans lequel transite l'huile entre les deux référentiels.

Dans un exemple préféré de réalisation, le moyen souple formant amortisseur comprend deux flasques annulaires radiaux, fixés avec étanchéité entre la bague intermédiaire et ladite première bague, ladite chambre déformable à circulation d'huile étant délimitée par les flasques et les bagues correspondantes. L'huile dans la chambre assure l'amortissement des sollicitations extérieures et les forme souples des flasques permettent, par exemple dans l'application précitée, au dispositif de transfert de suivre les mouvements du réducteur sans risques d'engendrer des problèmes entre ceux-ci, tout en lubrifiant l'intérieur du réducteur.

Dans une autre réalisation, le moyen souple formant amortisseur se présente sous la forme d'une enceinte annulaire souple, rapportée de façon fixe entre la bague intermédiaire et ladite première bague, ladite chambre à circulation d'huile étant délimitée par l'enceinte.

Par ailleurs, le moyen souple peut être réalisé en différentes matières du moment qu'elle offre une souplesse ou déformation élastique acceptable et qu'elle garantit une fiabilité de fonctionnement appropriée tant du point de vue de la tenue mécanique que thermique. Par exemple, une matière plastique polymère, synthétique ou naturelle, élastomère, métallique ou composite peut convenir.

Dans l'application ci-dessus, le référentiel auquel est liée la bague raccordée à l'alimentation d'huile, est fixe et lié au carter statique de la turbomachine, et l'autre des référentiels est rotatif et lié au dispositif de réduction de vitesses.

Avantageusement, le moyen souple est prévu entre la bague fixe et la bague intermédiaire à l'intérieur de laquelle sont agencés les paliers.

On pourrait également envisager de prévoir le moyen souple entre la bague rotative et la bague intermédiaire à l'extérieur de laquelle sont alors montés les paliers.

De préférence, les bagues concentriques fixe et rotative sont respectivement les bagues externe et interne.

L'invention concerne également une turbomachine notamment pour aéronef, du type comportant une partie générateur de gaz et une partie de propulsion à doublet d'hélices coaxiales et contrarotatives entraînées par l'intermédiaire d'un réducteur épicycloïdal différentiel lié à une turbine de la partie générateur de gaz et lubrifié par un dispositif de transfert d'huile.

Avantageusement, le dispositif de transfert d'huile est tel que défini précédemment.

Les figures du dessin annexé feront bien comprendre comment l'invention peut être réalisée. Sur ces figures, des références identiques désignent des éléments semblables.
La figure 1 est une vue schématique en demi-coupe longitudinale d'une turbomachine à doublet d'hélices contrarotatives, telle qu'un turbomoteur « open rotor ».
La figure 2 est une vue agrandie de la figure 1, montrant notamment, de façon schématique, le dispositif de transfert d'huile à moyen déformable intégré, conformément à l'invention, entre un carter statique de turbine et le dispositif de réduction de vitesses, rotatif.
La figure 3 représente, selon une demi-coupe longitudinale détaillée, un exemple de réalisation du dispositif de transfert d'huile incluant, conformément à l'invention, le moyen déformable, agencé entre le carter statique et le dispositif réducteur.
La figure 4 montre, en perspective partielle, l'alimentation en huile du dispositif de transfert à moyen déformable depuis le carter statique de la turbomachine.

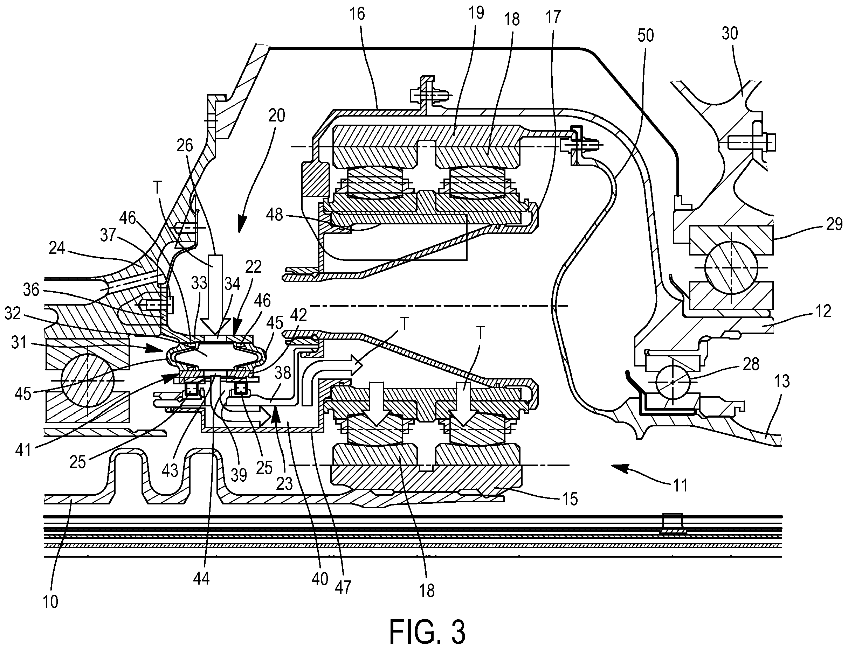

Le dispositif de transfert d'huile 20 conforme à l'invention est illustré en détail en regard de la figure 3 et permet d'amener l'huile de lubrification arrivant du carter statique (référentiel fixe) de la turbomachine, au dispositif de réduction de vitesses ou réducteur PGB 11 (référentiel rotatif) entraînant les arbres des hélices. On a symbolisé le trajet de l'huile par des flèches T. Le dispositif 20 se trouve dans un espace interne annulaire du turbomoteur 1, situé autour de l'arbre de turbine 10 et délimité entre le carter fixe 24 de celle-ci et le côté amont du réducteur PGB 11.

Dans l'exemple de réalisation illustré, le dispositif de transfert d'huile 20 comporte la bague annulaire externe fixe 22, la bague annulaire interne tournante 23, les paliers 25 tels que des roulements entre les deux bagues et, selon l'invention, un moyen souple 31 formant amortisseur en vue de définir une chambre annulaire 32, étanche et déformable, dans laquelle circule l'huile de lubrification en direction du réducteur.

En particulier, dans la paroi latérale 33 de la bague externe 22 sont ménagés des trous radiaux d'entrée 34 auxquels se raccordent les canalisations respectives 26 d'arrivée d'huile issues du carter fixe, comme le montrent en perspective la figure 4 (une seule canalisation étant représentée) et la flèche T sur la figure 3. Un bossage de raccordement 35 de la canalisation correspondante 26 est à cet effet prévu sur la paroi 33 autour de chaque trou d'entrée 34. La bague externe 22 présente de plus un rebord d'extrémité radial, externe 36, qui est rendu solidaire du carter statique 24 de la turbine de puissance 9 par des organes de fixation (vis) 37. La bague externe 22 est ainsi liée au référentiel fixe (carter statique).

La bague interne 23 est quant à elle solidaire du réducteur PGB 11, plus précisément d'une pièce cylindrique intermédiaire 47 du porte-satellites rotatif 17. La bague interne est ainsi liée au référentiel rotatif. Dans la paroi latérale 38 de celle-ci sont prévus des trous radiaux de sortie 39 permettant à l'huile d'être acheminée, par l'intermédiaire de passages respectifs 40 entre la bague 23 et la pièce 47, dans le référentiel tournant jusqu'à l'intérieur du réducteur 11 selon les flèches T.

Entre les deux bagues annulaires 22 et 23 du dispositif de transfert 20 se trouvent les deux roulements 25, qui sont montés, dans cet exemple de réalisation, entre la bague interne 23 et une bague annulaire intermédiaire 41. Ainsi, les deux paliers 25 espacés axialement portent sur la paroi latérale 38 de la bague interne 23 et sur la paroi latérale 42 de la bague intermédiaire 41, et assurent le changement de référentiels.

Le moyen souple formant amortisseur 31 est, dans cet exemple, prévu entre la paroi latérale 42 de la bague intermédiaire 41 et la paroi latérale 33 de la bague externe 22 de façon à créer la chambre interne étanche et déformable 32 dans laquelle arrive puis circule l'huile de lubrification. A cet effet, des trous de passage 43 sont ménagés dans la paroi latérale 42 de la bague intermédiaire pour mettre en communication fluidique la chambre étanche 32 du moyen souple 31 avec l'espace 44 entre les roulements 25, et donc jusqu'aux sorties 39 de la bague interne et passages 40 menant à l'intérieur du réducteur 11. Ainsi, l'huile est en circulation continue dans le dispositif de transfert 20 en passant par la chambre, l'espace et les passages.

Dans l'exemple représenté en regard de la figure 3, le moyen souple 31 est défini par deux flasques ou membranes annulaires déformables 45, espacés parallèlement l'un de l'autre et rapportés sensiblement au niveau des extrémités des bagues externe 22 et intermédiaire 41. On voit, notamment sur la figure 3, que les périphéries extérieures et intérieures de ces flasques 45 sont fixées aux parois latérales respectives 33, 42 de la bague externe et de la bague intermédiaire avec, en outre, des moyens de fixation étanches annulaires 46. On remarque que les flasques sont identiques et ont une forme de soufflet, en opposition l'un de l'autre, offrant souplesse et déformation élastique.

Selon la matière choisie qui doit leur donner la souplesse appropriée et permettre leur déformation élastique pour suivre les mouvements du réducteur, les flasques 45 peuvent être soudés aux bagues par soudage s'ils sont réalisés en matière métallique, ou collés s'ils sont réalisés en matière plastique synthétique ou naturelle, en un élastomère par exemple. Bien entendu, la matière est choisie pour garantir, en plus de leur caractère élastiquement déformable, la tenue mécanique et thermique des flasques durant le fonctionnement de la turbomachine et assurer ainsi fiabilité et longévité au dispositif de transfert 20.

La chambre interne et étanche 32 du moyen souple 31 est ainsi remplie d'huile de lubrification, ce qui assure l'amortissement des sollicitations extérieures entre le réducteur 11 et la bague externe fixe 22 du dispositif de transfert 20 par la souplesse des flasques annulaires 45 qui permettent de suivre ainsi les mouvements du réducteur, tout en garantissant la lubrification du réducteur. Ainsi, les désalignements susceptibles de se produire par le réducteur sont suivis et repris par le moyen souple amortisseur 31 du dispositif de transfert 20, sans engendrer de problèmes mécaniques entre eux. On remarque que le volume interne de la chambre reste sensiblement constant, mais qu'il se déforme au niveau des flasques selon les sollicitations reçues.

La section transversale du moyen souple 31 formant amortisseur, définissant la chambre interne étanche 32 remplie d'huile, pourrait être différente de celle représentée avec les flasques en soufflet. En effet, ces derniers pourraient être bombés, inclinés, étagés voire simplement rectilignes c'est-à-dire radiaux, du moment qu'une souplesse appropriée soit apportée.

Une description du réducteur différentiel 11 à train d'engrenages épicycloïdal inversé avec rotation inverse des deux hélices amont 2 et aval 3, est donnée ci-après.

Comme le montre la figure 3, il comporte, par rapport à l'axe longitudinal A, l'arbre d'entrée planétaire 15 sous la forme d'une roue dentée, qui est montée par une liaison par cannelures sur l'arbre de turbine 10 tournant dans un sens de rotation en entraînant le réducteur 11. Les satellites 18 au nombre de trois disposés à 120° les uns des autres (seul l'un d'eux étant visible sur la figure) s'engrènent autour de l'arbre d'entrée 15 et sont supportés par le porte-satellites 17 tournant, en conséquence, dans le sens de rotation inverse à l'arbre d'entrée. La couronne externe 19 s'engrène avec les satellites et tournent dans le même sens de rotation que l'arbre d'entrée 15 et en sens inverse du porte-satellites 17.

Le porte-satellites 17 comporte donc trois axes creux 50 parallèles sur lesquels sont montés respectivement les satellites 18, correspondant dans cet exemple à deux paliers (roulements) identiques montés, de façon alignée et espacée l'un de l'autre. Les axes creux 50 sont liés entre eux par le porte-satellites. La pièce cylindrique intermédiaire 47 s'engage dans les trois axes creux, en étant solidarisée au porte-satellites, et achemine l'huile issue des passages 40 à l'intérieur de ces axes puis, comme le montrent les flèches T, dans les satellites, la couronne et l'arbre planétaire du réducteur 11.

Grâce au moyen souple formant amortisseur 31 prévu entre les bagues fixe et rotative, le dispositif de transfert d'huile 20 peut ainsi supporter les variations de positions angulaires et/ou radiales du réducteur PGB, auquel est liée la bague rotative 23, par rapport au carter statique, auquel est liée la bague fixe 22.

Dans une variante de réalisation non représentée, le moyen souple peut se présenter sous la forme d'une enceinte annulaire souple à la manière d'une chambre à air. L'enceinte annulaire souple est alors disposée entre les bagues concernées en étant solidaire de celles-ci. Des ouvertures sont ménagées dans la paroi de l'enceinte pour permettre la circulation de l'huile depuis les entrées de la bague externe jusqu'aux passages de sortie menant au réducteur, en passant par la chambre interne étanche de l'enceinte annulaire souple.

Cette réalisation du moyen souple assure, de manière analogue à la réalisation précédente en flasques, l'amortissement des sollicitations extérieures et le suivi des mouvements du réducteur (désalignements) tout en garantissant la lubrification. La section transversale n'est pas limitée à une section rigoureusement circulaire, mais celle-ci pourrait être elliptique, ovale, cylindrique aplatie, etc... sans sortir du cadre de l'invention, telle que définie par les revendications.

## Revendications

1. Dispositif de transfert d'huile entre deux référentiels en rotation l'un par rapport à l'autre, tels qu'un carter statique et un dispositif de réduction de vitesses d'une turbomachine, comportant :
- deux bagues concentriques externe (22) et interne (23) dont l'une est raccordée à une alimentation d'huile issue de l'un des référentiels, et dont l'autre bague est liée à l'autre des référentiels, l'huile circulant entre lesdites bagues depuis l'un des référentiels jusque dans l'autre des référentiels, et
- des paliers (25) entre les bagues pour réaliser le changement de référentiels entre celles-ci,
**caractérisé par le fait qu'**il comporte, de plus, un moyen souple (31) formant amortisseur, prévu entre une première desdites bagues et une bague intermédiaire (41) qui est séparée d'une seconde desdites bagues par lesdits paliers (25), ledit moyen souple (31) définissant une chambre étanche déformable (32) dans laquelle transite l'huile entre les deux référentiels.

2. Dispositif selon la revendication 1, dans lequel des trous de communication (34, 43, 39) sont ménagés dans les bagues externe, intermédiaire et interne pour la circulation de l'huile.

3. Dispositif selon la revendication 2, dans lequel les trous de communication (34, 39) ménagés dans la bague externe (22) et la bague interne (21) sont configuré pour assurer la totalité du transfert d'huile entre les deux référentiels par le dispositif.

4. Dispositif selon la revendication 2 ou 3, dans lequel les paliers (25) sont agencés de manière à définir, avec les parties de ladite deuxième bague et de la bague intermédiaire où sont ménagés lesdits trous de communication, un espace (44) dans lequel transite l'huile entre les deux référentiels.

5. Dispositif selon l'une des revendications 1 à 4, dans lequel le moyen souple (31) formant amortisseur comprend deux flasques annulaires radiaux (45), fixés à leurs périphéries avec étanchéité entre la bague intermédiaire (41) et ladite première bague, ladite chambre déformable (32) à circulation d'huile étant délimitée par les flasques et les bagues correspondantes.

6. Dispositif selon l'une des revendications 1 à 4, dans lequel le moyen souple (31) formant amortisseur se présente sous la forme d'une enceinte souple annulaire, rapportée de façon fixe entre la bague intermédiaire et ladite première bague, ladite chambre à circulation d'huile étant délimitée par l'enceinte.

7. Dispositif selon l'une des revendications 1 à 6, dans lequel le référentiel auquel est liée la bague raccordée à l'alimentation d'huile, est fixe et lié au carter statique de la turbomachine, et l'autre des référentiels est rotatif et lié au dispositif de réduction de vitesses.

8. Dispositif selon l'une des revendications 1 à 6, dans lequel les bagues concentriques fixe (22) et rotative (23) sont respectivement les bagues externe et interne.

9. Dispositif selon l'une des revendications 1 à 8, dans lequel le moyen souple (31) est réalisé en une matière plastique polymère, synthétique ou naturelle, élastomère, métallique ou composite assurant déformation élastique et étanchéité.

10. Turbomachine notamment pour aéronef, comportant une partie générateur de gaz (G) et une partie de propulsion (P) à doublet d'hélices coaxiales (2, 3) amont et aval contrarotatives, entraînées en rotation par l'intermédiaire d'un dispositif de réduction de vitesses différentiel (11) lié à une turbine de la partie générateur de gaz, et lubrifié à partir d'un dispositif de transfert d'huile (20) tel que défini selon l'une des revendications 1 à 9.

## Patentansprüche

1. Vorrichtung zum Übertragen von Öl zwischen zwei sich relativ zueinander drehenden Referenzrahmen, wie ein statisches Gehäuse und eine Drehzahluntersetzungsvorrichtung einer Turbomaschine, die Folgendes umfasst:
- einen äußeren (22) und einen inneren (23) konzentrischen Ring, von welchen einer an eine Ölversorgung, die aus einem der Referenzrahmen stammt, angeschlossen ist, und von welchen der andere Ring mit dem anderen der Referenzrahmen verbunden ist, wobei das Öl zwischen den Ringen von einem der Referenzrahmen bis in den anderen der Referenzrahmen zirkuliert, und
- Lager (25) zwischen den Ringen, um das Wechseln von Referenzrahmen zwischen diesen auszuführen,
**gekennzeichnet durch** die Tatsache, dass sie außerdem ein biegsames Mittel (31) umfasst, das einen Dämpfer bildet, der zwischen einem ersten der Ringe und einem intermediär Ring (41), der von einem zweiten der Ringe durch die Lager (25) getrennt ist, vorgesehen ist, wobei das biegsame Mittel (31) eine verformbare dichte Kammer (32) definiert, in der das Öl zwischen den zwei Referenzrahmen durchgeführt wird.

2. Vorrichtung nach Anspruch 1, wobei Kommunikationsbohrungen (34, 43, 39) in dem äußeren, dem intermediär und dem inneren Ring für die Zirkulation des Öls eingerichtet sind.

3. Vorrichtung nach Anspruch 2, wobei die Kommunikationsbohrungen (34, 39), die in dem äußeren Ring (22) und dem inneren Ring (21) eingerichtet sind, ausgelegt sind, um die gesamte Ölübertragung zwischen den zwei Referenzrahmen durch die Vorrichtung sicherzustellen.

4. Vorrichtung nach Anspruch 2 oder 3, wobei die Lager (25) derart eingerichtet sind, dass sie mit den Teilen des zweiten Rings und des intermediär Rings, an welchen die Kommunikationsbohrungen eingerichtet sind, einen Raum (44) definieren, in dem das Öl zwischen den zwei Referenzrahmendurchgeführt wird.

5. Vorrichtung nach einem der Ansprüche 1 bis 4, wobei das biegsame Mittel (31), das einen Dämpfer bildet, zwei radiale ringförmige Flansche (45) umfasst, die an ihren Umfängen mit Abdichtung zwischen dem intermediär Ring (41) und dem ersten Ring befestigt sind, wobei die verformbare Kammer (32) mit Ölzirkulation von den Flanschen und den entsprechenden Ringen begrenzt ist.

6. Vorrichtung nach einem der Ansprüche 1 bis 4, wobei das biegsame Mittel (31), das einen Dämpfer bildet, die Form eines kreisförmigen biegsamen Einschlusses aufweist, der auf feststehende Art zwischen dem intermediär Ring und dem ersten Ring angefügt ist, wobei die Ölzirkulationskammer von dem Einschluss begrenzt ist.

7. Vorrichtung nach einem der Ansprüche 1 bis 6, wobei der Behälter, der mit dem Ring verbunden ist, der an die Ölversorgung angeschlossen ist, stationär und mit dem statischen Gehäuse der Turbomaschine verbunden ist, und der andere der Behälter drehend und mit der Drehzahluntersetzungsvorrichtung verbunden ist.

8. Vorrichtung nach einem der Ansprüche 1 bis 6, wobei der feststehende (22) und der drehende (23) konzentrische Ring jeweils der äußere und der innere Ring sind.

9. Vorrichtung nach einem der Ansprüche 1 bis 8, wobei das biegsame Mittel (31) aus einem Polymermaterial, künstlichen oder natürlichen Material, Elastomer, metallischen Material oder Verbundwerkstoff hergestellt ist, der/das elastische Verformung und Abdichtung sicherstellt.

10. Turbomaschine, insbesondere für Luftfahrzeug, das einen Gaserzeugungsteil (G) und einen Antriebsteil (P) mit doppelter Koaxialpropeller (2, 3) stromaufwärts und stromabwärts gegeneinander drehend umfasst, die in Drehung über eine Differenzial-Drehzahluntersetzungsvorrichtung (11) angetrieben sind, die mit einer Turbine des Gasgenerators verbunden ist, und ausgehend von einer Ölübertragungsvorrichtung (20), wie nach einem der Ansprüche 1 bis 9 definiert, geschmiert ist.

## Claims

1. Device for transferring oil between two reference frames rotating relative to each other, such as a static casing and a speed reduction device of a turbine engine, comprising:
- two outer (22) and inner (23) concentric rings, one of which is connected to an oil supply issuing from one of the reference frames, and the other one of which is connected to the other one of the reference frames, the oil circulating between said rings from one of the reference frames until in the other of the reference frames, and
- bearings (25) between the rings in order to change reference frames between said rings,
**characterised by** the fact that it further comprises a flexible means (31) forming a damper, provided between a first of said rings and an intermediate ring (41) that is separated from a second of said rings by said bearings (25), said flexible means (31) defining a deformable sealed chamber (32) in which the oil travels between the two reference frames.

2. Device according to claim 1, wherein communication holes (34, 43, 39) are provided in the outer, intermediate and inner rings for circulation of the oil.

3. Device according to claim 2, wherein the communication holes (34, 39) provided in the outer ring (22) and the inner ring (21) are designed to allow the entire transfer of oil between the two reference frames by the device.

4. Device according to either claim 2 or claim 3, wherein the bearings (25) are arranged so as to define, together with the parts of said second ring and of the intermediate ring where said communication holes are provided, a space (44) in which the oil passes between the two reference frames.

5. Device according to any of claims 1 to 4, wherein the flexible means (31) forming a damper comprises two radial annular plates (45), fixed sealingly at their peripheries between the intermediate ring (41) and said first ring, said deformable oil-circulation chamber (32) being delimited by the corresponding plates and rings.

6. Device according to any of claims 1 to 4, wherein the flexible means (31) forming a damper is in the form of an annular flexible enclosure, attached in a stationary manner between the intermediate ring and said first ring, said oil-circulation chamber being delimited by the enclosure.

7. Device according to any of claims 1 to 6, wherein the reference frame to which the ring connected to the oil supply is connected is fixed and is connected to the static casing of the turbine engine, and the other one of the reference frames is rotary and is connected to the speed reduction device.

8. Device according to any of claims 1 to 6, wherein the fixed (22) and rotary (23) concentric rings are the outer and inner rings respectively.

9. Device according to any of claims 1 to 8, wherein the flexible means (31) is produced from a polymer, synthetic or natural plastics material, an elastomer, a metal or a composite material providing elastic deformation and sealing.

10. Turbine engine, in particular for an aircraft, comprising a gas generator part (G) and a propulsion part (P) comprising a pair of contra-rotating upstream and downstream coaxial propellers (2, 3), rotated by means of a differential speed reduction device (11) connected to a turbine of the gas generator part, and lubricated by means of an oil-transfer device (20) as defined according to any of claims 1 to 9.
